# EUROPEAN PATENT SPECIFICATION

(11) **EP 0 534 112 B1**
(45) Date of publication and mention of the grant of the patent: **10.11.1999**
(21) Application number: 92113676.8
(22) Date of filing: 11.08.1992
(51) Int. Cl.: C09B 67/22, D06P 3/06, D06P 3/16, D06P 3/24

(54) **Dye composition, dyeing method, and dyed protein fiber**
Farbstoffmischung, Färbeprozess und gefärbte Proteinfaser
Composition colorante, procédé de teinture et fibre protéinique teinté

(30) Priority: 27.09.1991 JP 24889191; 16.12.1991 JP 33178991
(43) Date of publication of application: 31.03.1993
(73) Proprietor: RUAN CO., LTD., Maebashi-shi, Gunma 371 (JP)
(72) Inventor: Abe, Minoru, Maebashi-shi, Gunma 371 (JP)
(74) Representative: Glawe, Delfs, Moll & Partner

(56) References cited:
- EP-A- 0 092 512
- EP-A- 0 127 579
- EP-A- 0 150 675
- EP-A- 0 181 292
- GB-A- 1 117 141
- GB-A- 2 079 792

## Description

### Background of the Invention

### 1. Field of the Invention:

The present invention relates to a dye composition, a dyeing method that employs said dye composition, and protein fiber and/or polyamide fiber dyed with said dye composition. More particularly, the present invention relates to a dye composition which is comprised of specific existing dyes proven to be safe, such that the composition can be used to dye the fiber of artificial hair to a natural hair color. The present invention further relates to a dyeing method that employs said dye, and to a fiber for artificial hair which when dyed with said dye composition remains very safe for application to the human body.

### 2. Background Information:

Natural and synthetic fibers are used over a wide range of applications, not only for clothing but also for such use as interior finish and automotive trim. The field of application of fibers is expanding in parallel with the development of new dyes suitable for more specific uses.

One such example is artificial hair. Recently there have been developed new dyes which can be used to achieve the desired hair colors and exhibit good color fastness.

A new application of these fibers that has come into fashion, is to sprinkle short fibers (1 mm or less) over a head with thinning hair. The short fibers hide the scalp and electrostatically stick to the hair, making it look thicker. The short fibers for this purpose are dyed in black or brown to match the natural hair color. The dyed short fibers are regarded as artificial hair which can be used to replace wigs as they are easier to use.

The above-mentioned short fibers are made of cellulose fiber, protein fiber, and synthetic fiber, which are dyed with an appropriate dye for the particular fiber used. One example of these commercial products is cellulose fibers cut to lengths of 0.3-0.5 mm and dyed with a direct dye, reactive dye, or vat dye.

However, the present conventional fibers used for artificial hair have safety problems associated with their use. One problem stems from the fact that the conventional dyes used have not been proven to be safe for use with the human body, especially when applied to the human scalp. Another problem is that these short fibers get into the eyes and mouth during use. The present situation has called users' attention to the need for artificial hair dyed with a dye proven to be safe. However, no one has succeeded in producing the desired hair color with a safe dye.

GB-A-2 079 792 discloses a dyestuff composition for treatment of dolls artificial hair. The disclosed compositions are removable by water and comprise preferably food grade acid dyes.

GB-A 1 117 141 discloses a method of dying fibers used in children's toys. This document utilizes pH sensitive indicator dye sets on one side of its shift range.

### Summary of the Invention

The present invention was completed in view of the foregoing problems. It is an object of the present invention to provide a new, useful, and safe dye composition, dyeing method and dyed fiber. The dye composition is comprised of existing specific dyes which are proven to be safe, so that they pose no safety problems when used to dye artificial hair fiber to a natural hair color. As a result, the artificial hair fiber which is dyed with said dye composition is safe and suitable for application to the human body.

The present invention is defined in the independent claims. Preferred embodiments are given in the dependent claims.

### Description of the Preferred Embodiments

### I. Dye Composition:

One of the above-mentioned objects of the present invention is achieved by obtaining a dye composition which is comprised of a compound represented by formula I, a compound represented by formula II, a compound represented by formula III, a compound represented by formula IV, and a compound represented by formula V (shown below).

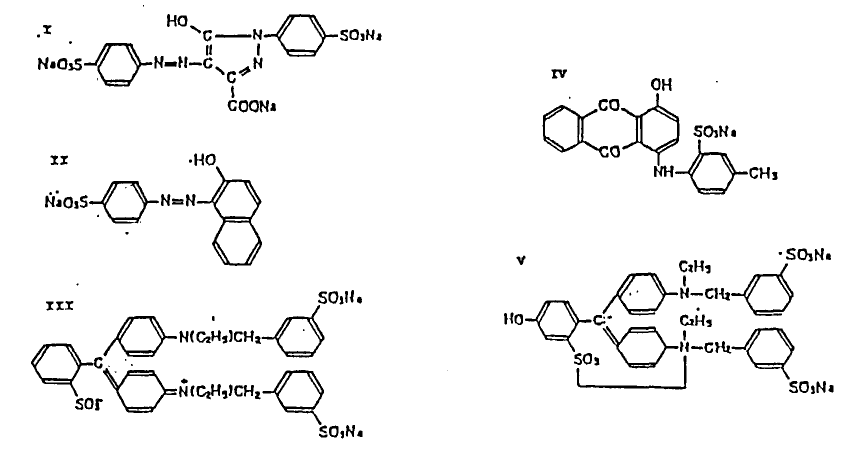

The dye composition can be varied depending on the desired color to be achieved. The range for the above dye composition is 10 to 20 percent by weight (wt%) of formula I, 10 to 30 percent by weight of formula II, 5 to 25 percent by weight of formula III, 15 to 35 percent by weight of formula IV, and 15 to 35 percent by weight of formula V.

Most preferably, the dye composition wt% should be 18-19 wt% formula I, 18-19 wt% formula II, 12-13 wt% formula III, 25 to 26 wt% formula IV, and 25 to 26 wt% formula V.

When this dye composition is used to dye short natural or synthetic fibers such as wool, silk, or nylon, the result is a colorfast short black fiber. This fiber also exhibits electrostatic properties that increases the ability of the fiber to stick to scalp or hair. This reduces shedding and reduces floating fibers from getting into a user's eyes or mouth.

Another of the above-mentioned objects of the present invention is achieved by obtaining a dye composition which comprises a compound represented by formula I, a compound represented by formula II, a compound represented by formula III, a compound represented by formula VI, and a compound represented by formula VII (formula VI and VII shown below).

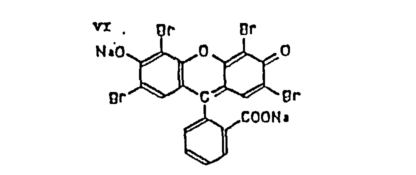

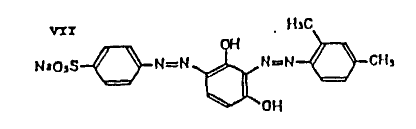

The dye composition can be varied depending on the desired color to be achieved. However, a preferred range for the above dye composition is 15-35 wt% formula I, 5-35 wt% formula II, 3-25 wt% formula III, 5-30 wt% formula VI, and 15-40 wt% formula VII.

When this composition is used to dye short natural or synthetic fibers such as wool, silk, or nylon, the result is a colorfast, electrostatic short brown fiber suitable for use as artificial hair.

For a fiber color of dark brown, it is preferred that the dye composition is 23-24 wt% formula I, 15-16 wt% formula II, 12-13 wt% formula III, 15-16 wt% formula VI, and 31-32 wt% formula VII. If the fiber color desired is a golden or yellowish brown, it is preferred that the dye composition is 24-25 wt% formula I, 16-17 wt% formula II, 9-10 wt% formula III, 16-17 wt% formula VI, and 32-33 wt% formula VII. For a fiber color of brown, it is preferred that the composition is 23-24 wt% formula I, 17-18 wt% formula II, 9-10 wt% formula III, 17-18 wt% formula VI, and 31-31 wt% formula VII. For a light brown fiber color, it is preferred that the composition is 18-19 wt% formula I, 28-29 wt% formula II, 6-7 wt% formula III, 23-24 wt% formula VI, and 23-24 wt% formula VII.

The composition may be varied to obtain the desired color and tone according to the desired hair color to be matched. In addition, the dyes may be used in combination with other suitable dyes.

Yet another of the above-mentioned objects of the present invention is achieved by obtaining a dye composition which is comprised of a compound represented by the formula I, a compound represented by the formula III, a compound represented by the formula VI, and a compound represented by the formula II.

The dye composition can be varied by the desired color to be achieved. However, a preferred range for the above dye composition is 10-30 wt% formula I, 35-55 wt% formula III, 2-15 wt% formula VI, and 15-35 wt% formula II.

When this dye composition is used to dye short natural or synthetic fibers such as wool, silk, or nylon, the result is a colorfast short black fiber.

Still another of the above-mentioned objects of the present invention is achieved by obtaining a dye composition which is comprised of a compound represented by the formula I, a compound represented by the formula III, and a compound represented by the formula VI.

The dye composition can be varied depending on the desired color to be achieved. However, a preferred range for the above dye composition is 20-50 wt% for formula I, 10-35 wt% for formula III, and 30-55 wt% for formula VI.

When this composition is used to dye short natural or synthetic fibers such as wool, silk, or nylon, the result is a colorfast, electrostatic short brown fiber suitable for use as artificial hair.

If the fiber color desired is dark brown, it is preferred that the dye composition is 31-32 wt% formula I, 26-27 wt% formula III, and 42-43 wt% formula VI. For a fiber color of brown, it is preferred that the composition is approximately 37-38 wt% formula I, 21-22 wt% formula III, and 40-41 wt% formula VI. For a light brown fiber color, it is preferred that the composition is approximately 36-37 wt% formula I, 15-16 wt% formula III, and 47-48 wt% formula VI.

The specific dyes found to be useful in the present invention are registered in the United States as edible dyes, pharmaceutical dyes, and cosmetic dyes. The compound represented by formula I is registered as FD&C Yellow No. 5, C.I. 19140. The compound represented by formula II is registered as D&C Orange No. 4, C.I. 15510. The compound represented by formula III is registered as FD&C Blue No. 1, C.I. 42090. The compound represented by formula IV is registered as Ext. D&C Violet No. 2, C.I. 60730. The compound represented by formula V is registered as Ext. D&C Green No. 3, C.I. 42053. The compound represented by formula VI is registered as D&C Red No. 22, C.I. 45380. The compound represented by formula VII is registered as D&C Brown No. 1, C.I. 20170.

The scope of the present invention is not intended to be limited to the above-mentioned examples. For example, the dye composition of the present invention, which is composed of acid dyes, may be used in any known manner in combination with any known dyeing agent suitable for use with such acid dyes.

### II. Dye Method:

Any of the above-cited dye composition can be used in the dye method. The dye composition is prepared by crushing and mixing the compounds in the appropriate combination. The composition is dissolved in hot water, preferably 60°C and stirred to make a dye liquor. The fibers are prepared by cutting the fibers into short pieces, preferably 0.3 to 0.5 mm long, washed with soapy water, preferably at 60-70°C, for approximately 5 minutes, and rinsed. The fibers are then soaked in the dye liquor, preferably at 60°C, for approximately 60 minutes and then rinsed and dehydrated. The fibers are dispersed in water with a dispersing agent, preferably Aerosil 200 and ammonium chloride. The fibers are dehydrated again and dried, preferably at 60-70°C, for approximately 10-15 minutes.

It is also acceptable to use an acid such as sulfuric acid or acetic acid to form the dye liquor. Aerosil 200 is a dispersing agent commonly used for cosmetics. Other safe dispersing agents are acceptable. Ammonium chloride is also safe for use in cosmetics, even though it remains in the dyed fiber, so long as it is of food additive grade.

Although the method consists of cutting fiber into small pieces and dyeing them, the sequence of the procedure may be altered.

The fibers to be dyed may be any natural fiber, synthetic fiber, protein fiber, or polyamide fiber which can be dyed with an acid dye.

In the present invention, protein fiber means any fiber constructed of proteins. It includes animal fibers (such as silk, wool, cashmere, goat hair, and feather) and regenerated protein fibers produced from soybean or milk. Also, the polyamide fiber means any polymeric fiber having amide groups, such as nylon, Nomex, Kevlar 29, and Kevlar 49.

### III. Dyed Fiber:

The dyed fibers made according to the method above are much safer for application to the human body than the conventional short fibers currently used as artificial hair. The fibers of the present invention do not pose any safety problem when they come into contact with the scalp or get into the eye and mouth.

The short fibers in different colors can be used in the same manner as the conventional short fibers used as artificial hair. They are easy to use. When sprinkled over the head with thinning hair, they hide the scalp and electrostatically stick to the hair to make it look thicker. The user can select the desired color. They are easily removed from the head by shampoo. They may also be used in combination with a hair tonic or hair spray. In addition, they are colorfast and do not stain clothing.

The present invention provides protein fiber and polyamide fiber dyed with a dye composition composed of existing specific dyes which have been proven to be safe and are safe when used as artificial hair.

The dye composition and dye method of the present invention may be used for clothing and artificial wig hair. They may also be used for other fibers which need to meet safety standards when used in human applications.

The following examples are offered to illustrate the present invention and are not intended as limitations. They may be varied to give the desired color tone according to the desired color. In addition, the dyes shown in the examples may be used in combination with other dyes, if appropriate.

### Example 1

The following example illustrates the dye composition and method for dyeing to obtain short black wool fibers which can be safely used as artificial hair.

A dye composition was prepared by mixing and crushing 1.5 g of the compound represented by formula I, 1.5 g of the compound represented by formula II, and 1.0 g of the compound represented by formula III, 2.0 g of the compound represented by formula IV, and 2.0 g of the compound represented by formula V.

The dye composition was dissolved in 5 liters of hot water (60°C) while stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil co., Ltd.) and 2 g of ammonium chloride. The short fibers were dehydrated again and dried at 60-70°C for 10-15 minutes.

### Example 2

The following example illustrates the dye composition and method for dyeing to obtain short black silk fibers which can be safely used as artificial hair.

A dye composition was prepared by mixing and crushing 1.5 g of the compound represented by formula I, 1.5 g of the compound represented by formula II, and 1.0 g of the compound represented by formula III, 2.0 g of the compound represented by formula IV, and 2.0 g of the compound represented by formula V.

The dye composition was dissolved in 5 liters of hot water (60°C) while stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes, then rinsed and dehydrated. The dyed short fibers were dispersed in water together with 0.2 g of Aerosil 200 (made by Aerosil co., Ltd.) and 2 g of ammonium chloride. The short fibers were dehydrated again and dried at 60-70°C for 10-15 minutes.

### Example 3

The following example illustrates the dye composition and method for dyeing to obtain short black nylon fibers which can be safely used as artificial hair.

A dye composition was prepared by mixing and crushing 1.5 g of the compound represented by formula I, 1.5 g of the compound represented by formula II, and 1.0 g of the compound represented by formula III, 2.0 g of the compound represented by formula IV, and 2.0 g of the compound represented by formula V.

The dye composition was dissolved in 5 liters of hot water (60°C) while stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes, then rinsed and dehydrated. The dyed short fibers were dispersed in water together with 0.2 g of Aerosll 200 (made by Aerosil co., Ltd.) and 2 g of ammonium chloride. The short fibers were dehydrated again and dried at 60-70°C for 10-15 minutes.

### Example 4

The following example illustrates the dye composition and method for dyeing to obtain short black wool fibers which can be safely used as artificial hair.

A dye composition was prepared by mixing and crushing 1.2 g of the compound represented by formula I, 1.4 g of the compound represented by formula II, 2.6 g of the compound represented by formula III, and 0.4 g of the compound represented by formula VI.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 5

The following example illustrates the dye composition and method for dyeing to obtain short black silk fibers which can be safely used as artificial hair.

A dye composition was prepared by mixing and crushing 1.2 g of the compound represented by formula I, 1.4 g of the compound represented by formula II, 2.6 g of the compound represented by formula III, and 0.4 g of the compound represented by formula VI.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 6

The following example illustrates the dye composition and method for dyeing to obtain short black nylon fibers which can be safely used as artificial hair.

A dye composition was prepared by mixing and crushing 1.2 g of the compound represented by formula I, 1.4 g of the compound represented by formula II, 2.6 g of the compound represented by formula III, and 0.4 g of the compound represented by formula VI.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 7

The following example illustrates the dye composition and method for dyeing to obtain short dark brown wool fibers which can be safely used as artificial hair.

A dye composition was prepared by mixing and crushing 1.5 g of the compound represented by formula I, 1.0 g of the compound represented by formula II, 0.8 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 8

The following example illustrates the dye composition and method for dyeing to obtain short dark brown silk fibers which can be safely used as artificial hair.

A dye composition was prepared by mixing and crushing 1.5 g of the compound represented by formula I, 1.0 g of the compound represented by formula II, 0.8 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 9

The following example illustrates the dye composition and method for dyeing to obtain short dark brown nylon fibers which can be safely used as artificial hair.

A dye composition was prepared by mixing and crushing 1.5 g of the compound represented by formula I, 1.0 g of the compound represented by formula II, 0.8 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 10

The following example illustrates the dye composition and method for dyeing to obtain short dark brown wool fibers which can be safely used as artificial hair.

A dye composition was prepared by mixing and crushing 0.64 g of the compound represented by formula I, 0.528 g of the compound represented by formula III, and 0.86 g of the compound represented by formula VI.

The dye composition was dissolved in 5 liters of hot water (60°C) with stirring to make a dye liquor.

Scoured wool short.fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 11

The following example illustrates the dye composition and method for dyeing to obtain short dark brown silk fibers which can be safely used as artificial hair.

A dye composition was prepared by mixing and crushing 0.64 g of the compound represented by formula I, 0.528 g of the compound represented by formula III, and 0.86 g of the compound represented by formula VI.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 12

The following example illustrates the dye composition and method for dyeing to obtain short dark brown nylon fibers which can be safely used as artificial hair.

A dye composition was prepared by mixing and crushing 0.64 g of the compound represented by formula I, 0.528 g of the compound represented by formula III, and 0.86 g of the compound represented by formula VI.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 13

The following example illustrates the dye composition and method for dyeing to obtain short golden or yellowish brown wool fibers which can be safely used as artificial hair.

A dye composition was prepared by mixing and crushing 1.5 g of the compound represented by formula I, 1.0 g of the compound represented by formula II, 0.6 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 6-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 14

The following example illustrates the dye composition and method for dyeing to obtain short golden or yellowish brown silk fibers which can be safely used as artificial hair.

A dye composition was prepared by mixing and crushing 1.5 g of the compound represented by formula I, 1.0 g of the compound represented by formula II, 0.6 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 6-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 15

The following example illustrates the dye composition and method for dyeing to obtain short golden or yellowish brown nylon fibers which can be safely used as artificial hair.

A dye composition was prepared by mixing and crushing 1.5 g of the compound represented by formula I, 1.0 g of the compound represented by formula II, 0.6 g of the compound represented by formula III, 1.0 g of the compound represented by formula VI, and 2.0 g of the compound represented by formula VII.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 6-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 16

The following example illustrates the dye composition and method for dyeing to obtain short brown wool fibers which can be safely used as artificial hair.

A dye composition was prepared by mixing and crushing 0.835 go of the compound represented by formula I, 0.625 g of the compound represented by formula II, 0.333 g of the compound represented by formula III, 0.6 g of the compound represented by formula VI, and 1.1 g of the compound represented by formula VII.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 17

The following example illustrates the dye composition and method for dyeing to obtain short brown silk fibers which can be safely used as artificial hair.

A dye composition was prepared by mixing and crushing 0.835 go of the compound represented by formula I, 0.625 g of the compound represented by formula II, 0.333 g of the compound represented by formula III, 0.6 g of the compound represented by formula VI, and 1.1 g of the compound represented by formula VII.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 18

The following example illustrates the dye composition and method for dyeing to obtain short brown nylon fibers which can be safely used as artificial hair.

A dye composition was prepared by mixing and crushing 0.835 go of the compound represented by formula I, 0.625 g of the compound represented by formula II, 0.333 g of the compound represented by formula III, 0.6 g of the compound represented by formula VI, and 1.1 g of the compound represented by formula VII.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 19

The following example illustrates the dye composition and method for dyeing to obtain short brown wool fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 20

The following example illustrates the dye composition and method for dyeing to obtain short brown silk fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 21

The following example illustrates the dye composition and method for dyeing to obtain short brown nylon fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 22

The following example illustrates the dye composition and method for dyeing to obtain short light brown wool fibers which can be safely used as artificial hair.

A dye composition was prepared by mixing and crushing 0.17 g of the compound represented by formula I, 0.25 g of the compound represented by formula II, 0.066 g of the compound represented by formula III, 0.2 g of the compound represented by formula VI, and 0.2 g of the compound represented by formula VII.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 23

The following example illustrates the dye composition and method for dyeing to obtain short light brown silk fibers which can be safely used as artificial hair.

A dye composition was prepared by mixing and crushing 0.17 g of the compound represented by formula I, 0.25 g of the compound represented by formula II, 0.066 g of the compound represented by formula III, 0.2 g of the compound represented by formula VI, and 0.2 g of the compound represented by formula VII.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 24

The following example illustrates the dye composition and method for dyeing to obtain short light brown nylon fibers which can be safely used as artificial hair.

A dye composition was prepared by mixing and crushing 0.17 g of the compound represented by formula I, 0.25 g of the compound represented by formula II, 0.066 g of the compound represented by formula III, 0.2 g of the compound represented by formula VI, and 0.2 g of the compound represented by formula VII.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 25

The following example illustrates the dye composition and method for dyeing to obtain short light brown wool fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured wool short fibers were prepared by cutting wool into small pieces (0.3-0.5 mm in length) and washing 100 g of them with soapy water at 60-70°C for 5 minutes, followed by rinsing.

The scoured wool short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 26

The following example illustrates the dye composition and method for dyeing to obtain short light brown silk fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured silk short fibers were prepared by cutting silk into small pieces (0.3-0.5 mm in length) and washing 100 g of them with soapy water at 60-70°C for 5 minutes, followed by rinsing.

The scoured silk short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium chloride. The short fibers were dehydrated again and dried at 60-70°C for 10-15 minutes.

### Example 27

The following example illustrates the dye composition and method for dyeing to obtain short light brown nylon fibers which can be safely used as artificial hair.

A dye composition was prepared by mixing and crushing 0.64 g of the compound represented by formula I, 0.368 g of the compound represented by formula III, and 0.69 g of the compound represented by formula VI.

The dye composition was dissolved in 5 liters of hot water (60°C) with stirring to make a dye liquor.

Scoured nylon short fibers were prepared by cutting nylon into small pieces (0.3-0.5 mm in length) and washing 100 g of them with soapy water at 60-70°C for 5 minutes, followed by rinsing.

The scoured nylon short fibers were soaked in the dye liquor at 60°C for 60 minutes and then rinsed and dehydrated. The dyed short fibers were dispersed in water together with 0.2 g of Aerosil 200 (made by Aerosil Co., Ltd.) and 2 g of ammonium -chloride. The short fibers were dehydrated again and dried at 60-70°C for 10-15 minutes.

## Claims

1. Dyed fibers of protein, polyamide or silk 1mm or less in length which are color fast, said fibers dyed with a dye comprising a compound represented by formula I, a compound represented by formula II, a compound represented by formula III, a compound represented by formula IV, and a compound represented by formula V; wherein the formulas are: 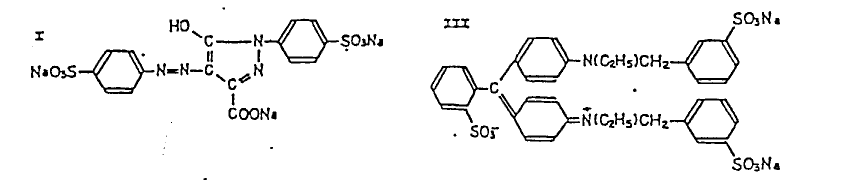 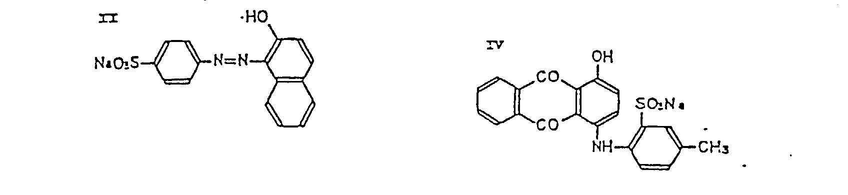 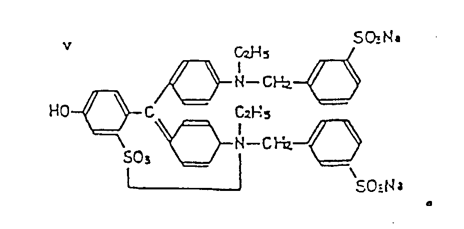 in which the compound represented by formula I comprises 10-20 % by weight, the compound represented by formula II comprises 10-30 % by weight, the compound represented by formula III comprises 5-25 % by weight, the compound represented by formula IV comprises 15-35 % by weight, and the compound represented by formula V comprises 15-35 % by weight.

2. Dyed fibers of protein, polyamide or silk lmm or less in length which are color fast, said fibers dyed with a dye comprising a compound represented by formula I, a compound represented by formula II, a compound represented by formula III, a compound represented by formula VI, and a compound represented by formula VII; wherein the formulas are: 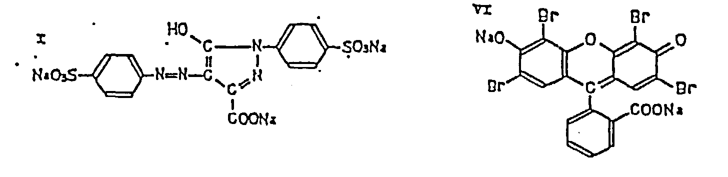 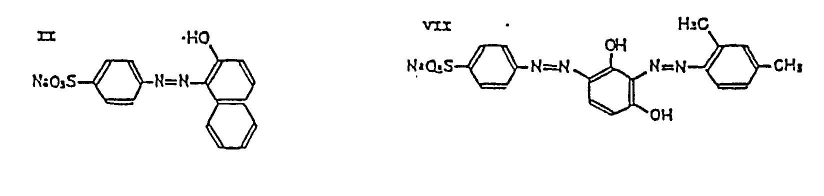 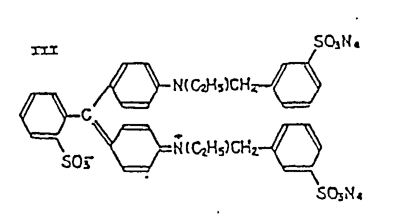 in which the compound represented by formula I comprises 15-35 % by weight, the compound represented by formula II comprises 5-35 % by weight, the compound represented by formula III comprises 3-25 % by weight, the compound represented by formula VI comprises 5-30% by weight, and the compound represented by formula VII comprises 15-40 % by weight.

3. Dyed fibers of protein, polyamide or silk 1mm or less in length which are color fast, said fibers dyed with a dye comprising a compound represented by formula I, a compound represented by formula II, a compound represented by formula III, and a compound represented by formula VI, in which the compound represented by formula I comprises 10-30 % by weight, the compound represented by formula II comprises 15-35 % by weight, the compound represented by formula III comprises 35-55 % by weight, and the compound represented by formula VI comprises 2-15 % by weight.

4. Artificial hair comprising protein fiber or polyamide fiber as defined in any of the claims 1 to 3.

5. Dyed protein fibers according to any of the claims 1 to 3, characterized in that they are wool fibers.

6. Dyed polyamide fibers according to any of the claims 1 to 3, characterized in that they are nylon fibers.

7. Black protein fibers according to claim 1, wherein said composition comprises a mixture of 18-19 % by weight of formula I; 18-19 % by weight of formula II; 12-13 % by weight of formula III; 25-26 % by weight of formula IV, and 25-26 % by weight of formula V.

8. Golden or yellowish brown protein fibers according to claim 2, wherein said composition comprises a mixture of 24-25 % by weight of formula I; 16-17 % by weight of formula II; 9-10 % by weight of formula III; 16-17 % by weight of formula VI; and 32-33 % by weight of formula VII.

9. Brown protein fibers according to claim 2, wherein said composition comprises a mixture of 23-24 % by weight of formula I; 15-16 % by weight of formula II; 12-13 % by weight of formula III; 15-16 % by weight of formula VI; and 31-32 % by weight of formula VII.

10. Light brown protein fibers according to claim 2, wherein said composition comprises a mixture of 23-24 % by weight of formula I; 17-18 % by weight of formula II; 9-10 % by weight of formula III; 17-18 % by weight of formula VI; and 31-32 % by weight of formula VII.

11. Light brown protein fibers according to claim 2, wherein said composition comprises a mixture of 18-19 % by weight of formula I; 28-29 % by weight of formula II, 6-7 % by weight of formula III; 23-24 % by weight of formula VI; and 23-24 % by weight of formula VII.

12. Black protein fibers 1mm or less in length which are color fast, said fibers dyed with a composition comprising a mixture of 21-22 % by weight of formula I; 25-26 % by weight of formula II; 46-47 % by weight of formula III; and 7-8 % by weight of formula VI.

13. Dark brown protein fibers 1mm or less in length which are color fast, said fibers dyed with a composition comprising a mixture of 31-32 % by weight of formula I; 26-27 % by weight of formula III; and 42-43 % by weight of formula VI.

14. Brown protein fibers 1mm or less in length which are color fast, said fibers dyed with a composition comprising a mixture of 37-38 % by weight of formula I; 21-22 % by weight of formula III; and 40-41 % by weight of formula VI.

15. Light brown protein fibers 1mm or less in length which are color fast, said fibers dyed with a composition comprising a mixture of 36-37 % by weight of formula I; 15-16 % by weight of formula III; and 47-48 % by weight of formula VI.

16. A wig comprising dyed fibers according to any of the claims 1 to 15.

17. Clothing comprising dyed fibers according to any of the claims 1 to 15.

18. A method of treating a human with thinning hair to hide the scalp and/or give the appearance of thicker hair comprising sprinkling over an area of thinning hair dyed fibers lmm or less in length of protein, polyamide or silk 1mm or less in length which are color fast, said fibers dyed with a dye comprising a compound represented by formula I, a compound represented by formula II, a compound represented by formula III, a compound represented by formula IV, and a compound represented by formula V; wherein the formulas are: 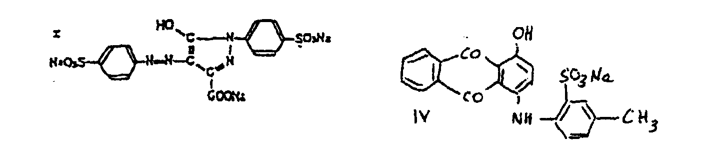 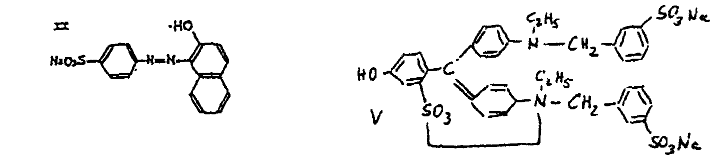 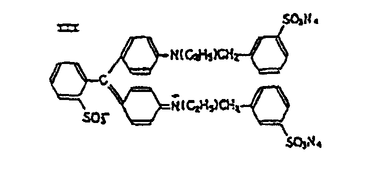 in which the compound represented by formula I comprises 10-20 % by weight, the compound represented by formula II comprises 10-30 % by weight, the compound represented by formula III comprises 5-25 % by weight, the compound represented by formula IV comprises 15-35 % by weight, and the compound represented by formula V comprises 15-35 % by weight.

19. The method of claim 18, wherein the fibers are selected from the group consisting of wool, silk and nylon fibers.

20. A method of treating a human with thinning hair to hide the scalp and/or to give the appearance of thicker hair comprising sprinkling over an area of thinning hair dyed fibers 1mm or less in length of protein, polyamide or silk 1mm or less in length which are color fast, said fibers dyed with a dye comprising a compound represented by formula I, a compound represented by formula II, a compound represented by formula III, a compound represented by formula VI, and a compound represented by formula VII; wherein the formulas are: 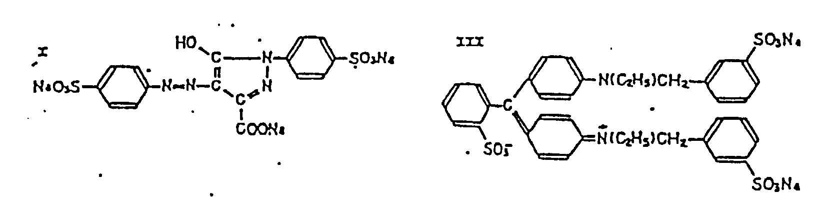 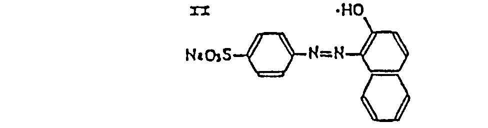 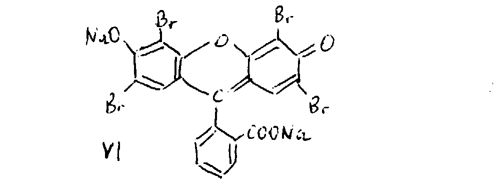 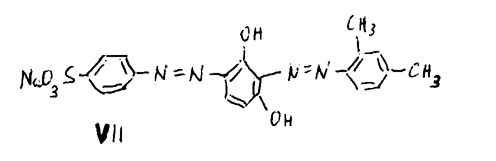 in which the compound represented by formula I comprises 15-35 % by weight, the compound represented by formula II comprises 5-35 % by weight, the compound represented by formula III comprises 3-25 % by weight, the compound represented by formula VI comprises 5-30 % by weight, and the compound represented by formula VII comprises 15-40 % by weight.

21. The method of claim 20, wherein the fibers are selected from the group consisting of wool, silk and nylon fibers.

22. The method of claim 18 or 20, further comprising applying a hair spray over the head after the fibers have been applied.

## Patentansprüche

1. Farbechte gefärbte Protein-, Polyamid- oder Seidefasern mit einer Länge von höchstens 1 mm, die mit einem Farbstoff, der eine Verbindung der Formel I, eine Verbindung der Formel II, eine Verbindung der Formel III, eine Verbindung der Formel IV und eine Verbindung der Formel V enthält, gefärbt sind, wobei die Formeln folgendermaßen aussehen: 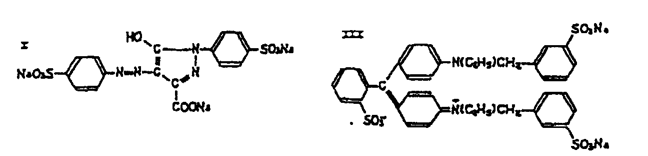 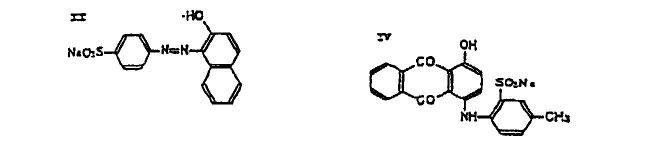 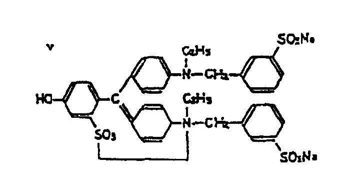 und die Verbindung der Formel I 10-20 Gew.-%, die Verbindung der Formel II 10-30 Gew.-%, die Verbindung der Formel III 5-25 Gew.-%, die Verbindung der Formel IV 15-35 Gew.-% und die Verbindung der Formel V 15-35 Gew.-% ausmacht.

2. Farbechte gefärbte Protein-, Polyamid- oder Seidefasern mit einer Länge von höchstens 1 mm, die mit einem Farbstoff, der eine Verbindung der Formel I, eine Verbindung der Formel II, eine Verbindugn der Formel III, eine Verbindung der Formel VI und eine Verbindung der Formel VII enthält, gefärbt sind, wobei die Formeln folgendermaßen aussehen: 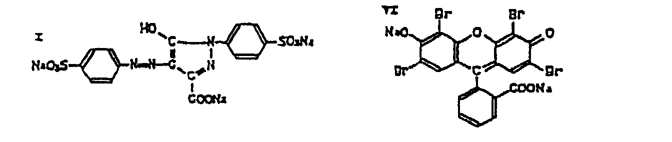 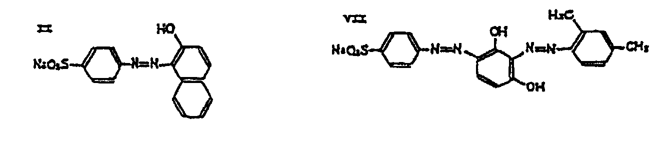 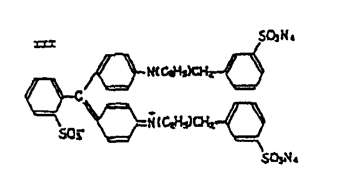 und die Verbindung der Formel I 15-35 Gew.-%, die Verbindung der Formel II 5-35 Gew.-%, die Verbindung der Formel III 3-25 Gew.-%, die Verbindung der Formel VI 5-30 Gew.-% und die Verbindung der Formel VII 15-40 Gew.-% ausmacht.

3. Farbechte gefärbte Protein-, Polyamid- oder Seidefasern mit einer Länge von höchstens 1 mm, die mit einem Farbstoff, der eine Verbindung der Formel I, eine Verbindung der Formel II, eine Verbindung der Formel III und eine Verbindung der Formel VI enthält, gefärbt sind, wobei die Verbindung der Formel I 10-30 Gew.-%, die Verbindung der Formel II 15-35 Gew.-%, die Verbindung der Formel III 35-55 Gew.-% und die Verbindung der Formel VI 2-15 Gew.-% ausmacht.

4. Kunsthaar aus Protein- oder Polyamidfaser nach einem der Ansprüche 1 bis 3.

5. Gefärbte Proteinfasern nach einem der Ansprüche 1 bis 3, dadurch gekennzeichnet, daß es sich dabei um Wollfasern handelt.

6. Gefärbte Polyamidfasern nach einem der Ansprüche 1 bis 3, dadurch gekennzeichnet, daß es sich dabei um Nylonfasern handelt.

7. Schwarze Proteinfasern nach Anspruch 1, wobei die Zusammensetzung eine Mischung aus 18-19 Gew-% Formel I, 18-19 Gew.-% Formel II, 12-13 Gew.-% Formel III, 25-26 Gew.-% Formel IV und 25-26 Gew.-% Formel V enthält.

8. Goldene oder gelbbraune Proteinfasern nach Anspruch 2, wobei die Zusammensetzung eine Mischung aus 24-25 Gew.-% Formel I, 16-17 Gew.-% Formel II, 9-10 Gew.-% Formel III, 16-17 Gew.-% Formel VI und 32-33 Gew.-% Formel VII enthält.

9. Braune Proteinfasern nach Anspruch 2, wobei die Zusammensetzung eine Mischung aus 23-24 Gew.-% Formel I, 15-16 Gew.-% Formel II, 12-13 Gew.-% Formel III, 15-16 Gew.-% Formel VI und 31-32 Gew.-% Formel VII enthält.

10. Hellbraune Proteinfasern nach Anspruch 2, wobei die Zusammensetzung eine Mischung aus 23-24 Gew.-% Formel I, 17-18 Gew.-% Formel II, 9-10 Gew.-% Formel III, 17-18 Gew.-% Formel VI und 31-32 Gew.-% Formel VII enthält.

11. Hellbraune Proteinfasern nach Anspruch 2, wobei die Zusammensetzung eine Mischung aus 18-19 Gew.-% Formel I, 28-29 Gew.-% Formel II, 6-7 Gew.-% Formel III, 23-24 Gew.-% Formel VI und 23-24 Gew.-% Formel VII enthält.

12. Farbechte schwarze Proteinfasern mit einer Länge von höchstens 1 mm, die mit einer Zusammensetzung, enthaltend eine Mischung aus 21-22 Gew.-% Formel I, 25-26 Gew.-% Formel II, 46-47 Gew.-% Formel III und 7-8 Gew.-% Formel VI, gefärbt sind.

13. Farbechte dunkelbraune Proteinfasern mit einer Länge von höchstens 1 mm, die mit einer Zusammensetzung, enthaltend eine Mischung aus 31-32 Gew.-% Formel I, 26-27 Gew.-% Formel III und 42-43 Gew.-% Formel VI, gefärbt sind.

14. Farbechte braune Proteinfasern mit einer Länge von höchstens 1 mm, die mit einer Zusammensetzung, enthaltend eine Mischung aus 37-38 Gew.-% Formel I, 21-22 Gew.-% Formel III und 40-41 Gew.-% Formel VI, gefärbt sind.

15. Farbechte hellbraune Proteinfasern mit einer Länge von höchstens 1 mm, die mit einer Zusammensetzung, enthaltend eine Mischung aus 36-37 Gew.-% Formel I, 15-16 Gew.-% Formel III und 47-48 Gew.-% Formel VI, gefärbt sind.

16. Perücke, enthaltend gefärbte Fasern nach einem der Ansprüche 1 bis 15.

17. Kleidungsstück, enthaltend gefärbte Fasern nach einem der Ansprüche 1 bis 15.

18. Verfahren zur Behandlung eines Menschen mit lichtem Haar zur Verdeckung der Kopfhaut und/oder zur Verleihung des Anscheins von vollerem Haar, bei dem man einen Bereich von lichtem Haar mit farbechten Protein-, Polyamid- oder Seidefasern mit einer Länge von höchstens 1 mm bestreut, wobei die Fasern mit einem Farbstoff, der eine Verbindung der Formel I, eine Verbindung der Formel II, eine Verbindung der Formel III, eine Verbindung der Formel IV und eine Verbindung der Formel V enthält, gefärbt sind, wobei die Formeln folgendermaßen aussehen: 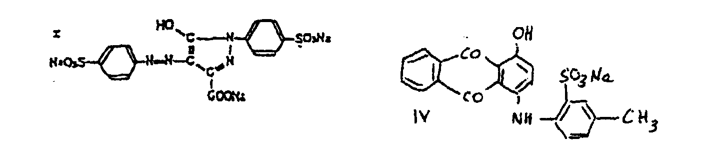 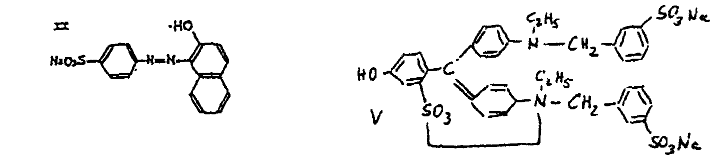 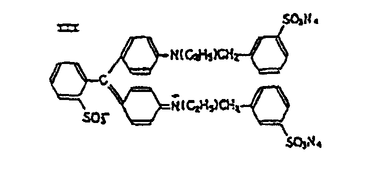 und die Verbindung der Formel I 10-20 Gew.-%, die Verbindung der Formel II 10-30 Gew.-%, die Verbindung der Formel III 5-25 Gew.-%, die Verbindung der Formel IV 15-35 Gew.-% und die Verbindung der Formel V 15-35 Gew.-% ausmacht.

19. Verfahren nach Anspruch 18, bei dem man die Fasern aus der Gruppe bestehend aus Woll-, Seide- und Nylonfasern auswählt.

20. Verfahren zur Behandlung eines Menschen mit lichtem Haar zur Verdeckung der Kopfhaut und/oder zur Verleihung des Anscheins von vollerem Haar, bei dem man einen Bereich von lichtem Haar mit farbechten Protein-, Polyamid- oder Seidefasern mit einer Länge von höchstens 1 mm bestreut, wobei die Fasern mit einem Farbstoff, der eine Verbindung der Formel I, eine Verbindung der Formel II, eine Verbindung der Formel III, eine Verbindung der Formel VI und eine Verbindung der Formel VII enthält, gefärbt sind, wobei die Formeln folgendermaßen aussehen: 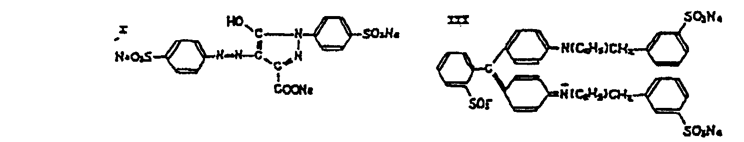 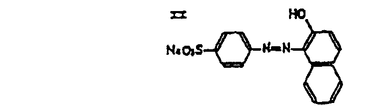 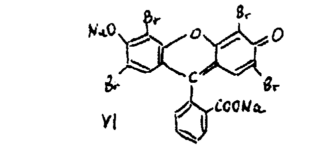 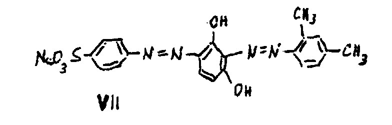 wobei die Verbindung der Formel I 15-35 Gew.-%, die Verbindung der Formel II 5-35 Gew.-%, die Verbindung der Formel III 3-25 Gew.-%, die Verbindung der Formel VI 5-30 Gew.-% und die Verbindung der Formel VII 15-40 Gew.-% ausmacht.

21. Verfahren nach Anspruch 20, bei dem man die Fasern aus der Gruppe bestehend aus Woll-, Seide- und Nylonfasern auswählt.

22. Verfahren nach Anspruch 18 oder 20, bei dem man ferner nach dem Aufbringen der Fasern Haarspray auf den Kopf aufbringt.

## Revendications

1. Fibres teintes de protéine, polyamide ou soie, ayant une longueur de 1 mm ou moins, qui sont de grand teint, lesdites fibres étant teintes avec un colorant comprenant un composé représenté par la formule I, un composé représenté par la formule II, un composé représenté par la formule III, un composé représenté par la formule IV, et un composé représenté par la formule V ; où les formules sont les suivantes : 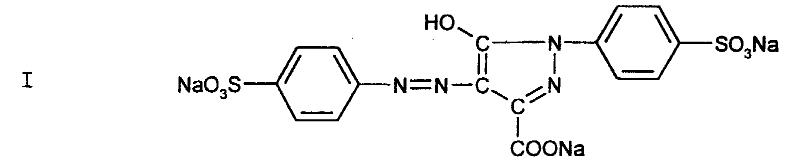 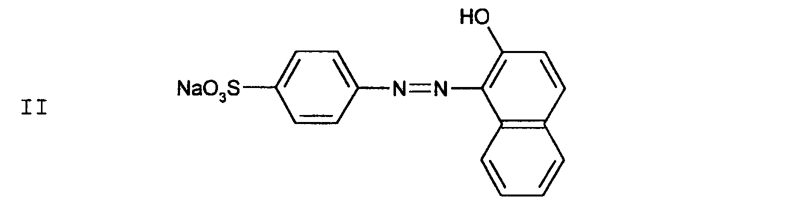 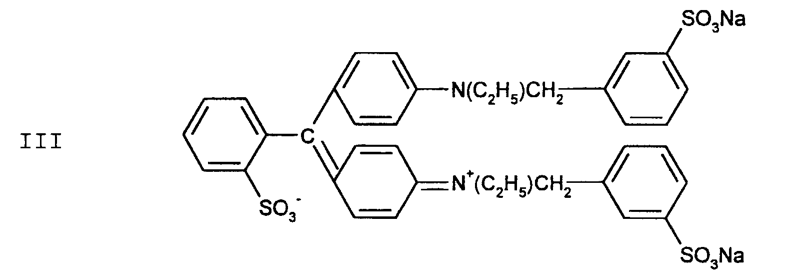 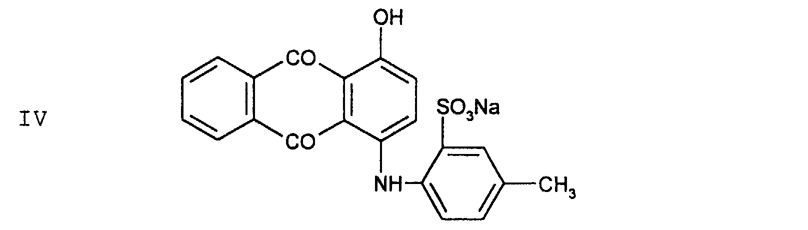 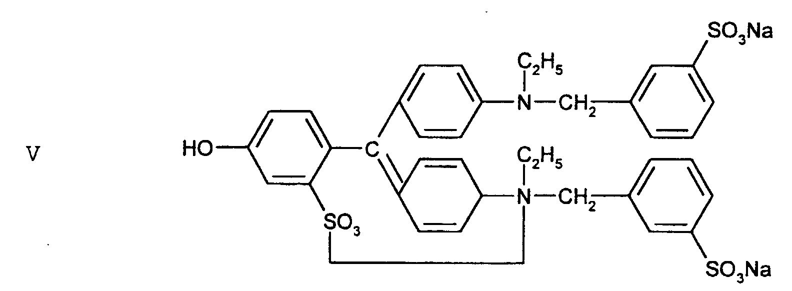 dans lequel le composé représenté par la formule I constitue 10 à 20 % en poids, le composé représenté par la formule II constitue 10 à 30 % en poids, le composé représenté par la formule III constitue 5 à 25 % en poids, le composé représenté par la formule IV constitue 15 à 35 % en poids, et le composé représenté par la formule V constitue 15 à 35 % en poids.

2. Fibres teintes de protéine, polyamide ou soie, ayant une longueur de 1 mm ou moins, qui sont de grand teint, lesdites fibres étant teintes avec un colorant comprenant un composé représenté par la formule I, un composé représenté par la formule II, un composé représenté par la formule III, un composé représenté par la formule VI, et un composé représenté par la formule VII ; où les formules sont les suivantes : 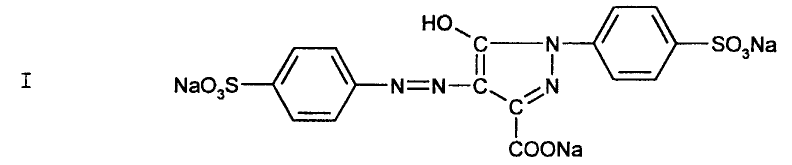 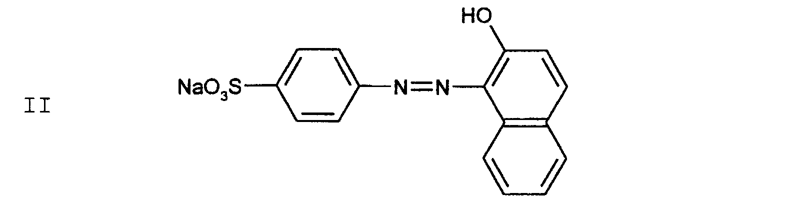 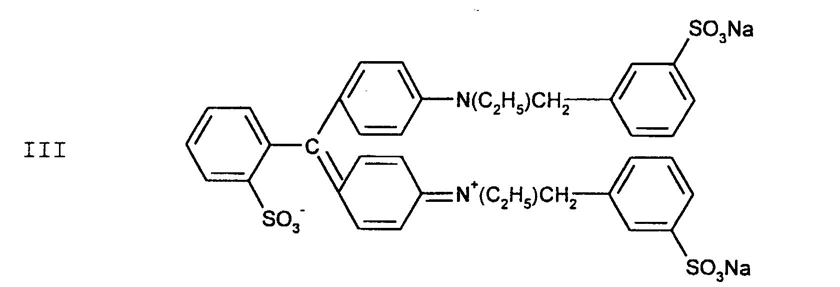 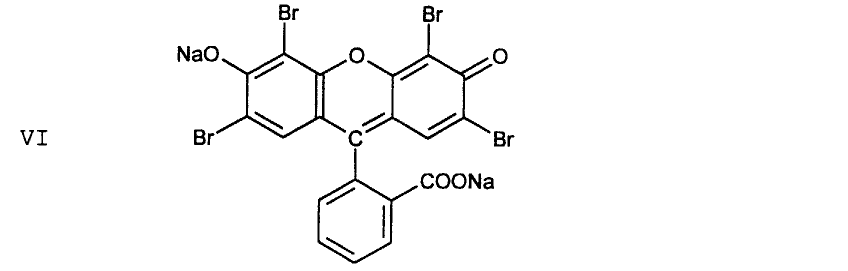 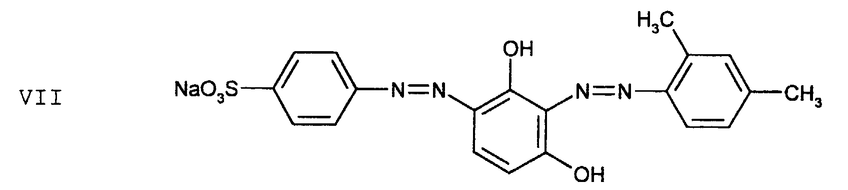 dans lequel le composé représenté par la formule I constitue 15 à 35 % en poids, le composé représenté par la formule II constitue 5 à 35 % en poids, le composé représenté par la formule III constitue 3 à 25 % en poids, le composé représenté par la formule VI constitue 5 à 30 % en poids, et le composé représenté par la formule VII constitue 15 à 40 % en poids.

3. Fibres teintes de protéine, polyamide ou soie, ayant une longueur de 1 mm ou moins, qui sont de grand teint, lesdites fibres étant teintes avec un colorant comprenant un composé représenté par la formule I, un composé représenté par la formule II, un composé représenté par la formule III, et un composé représenté par la formule VI, dans lequel le composé représenté par la formule I constitue 10 à 30 % en poids, le composé représenté par la formule II constitue 15 à 35 % en poids, le composé représenté par la formule III constitue 35 à 55 % en poids, et le composé représenté par la formule VI constitue 2 à 15 % en poids.

4. Cheveu artificiel comprenant une fibre de protéine ou une fibre de polyamide telle que définie dans l'une quelconque des revendications 1 à 3.

5. Fibres de protéine teintes selon l'une quelconque des revendications 1 à 3, caractérisées en ce qu'il s'agit de fibres de laine.

6. Fibres de polyamide teintes selon l'une quelconque des revendications 1 à 3, caractérisées en ce qu'il s'agit de fibres de nylon.

7. Fibres de protéine noires selon la revendication 1, dans lesquelles ladite composition comprend un mélange de 18 à 19 % en poids de la formule I ; 18 à 19 % en poids de la formule II ; 12 à 13 % en poids de formule III ; 25 à 26 % en poids de la formule IV, et 25 à 26 % en poids de la formule V.

8. Fibres de protéine brun jaunâtre ou doré selon la revendication 2, dans lesquelles ladite composition comprend un mélange de 24 à 25 % en poids de la formule I ; 16 à 17 % en poids de la formule II ; 9 à 10 % en poids de la formule III ; 16 à 17 % en poids de la formule VI ; et 32 à 33 % en poids de la formule VII.

9. Fibres de protéine brunes selon la revendication 2, dans lesquelles ladite composition comprend un mélange de 23 à 24 % en poids de la formule I ; 15 à 16 % en poids de la formule II ; 12 à 13 % en poids de la formule III ; 15 à 16 % en poids de la formule VI ; et 31 à 32 % en poids de la formule VII.

10. Fibres de protéine brun clair selon la revendication 2, dans lesquelles ladite composition comprend un mélange de 23 à 24 % en poids de la formule I ; 17 à 18 % en poids de la formule II ; 9 à 10 % en poids de la formule III ; 17 à 18 % en poids de la formule VI ; et 31 à 32 % en poids de la formule VII.

11. Fibres de protéine brun clair selon la revendication 2, dans lesquelles ladite composition comprend un mélange de 18 à 19 % en poids de la formule I ; 28 à 29 % en poids de la formule II, 6 à 7 % en poids de la formule III, 23 à 24 % en poids de la formule VI ; et 23 à 24 % en poids de la formule VII.

12. Fibres de protéine noires ayant une longueur de 1 mm ou moins, qui sont de grand teint, lesdites fibres étant teintes avec une composition comprenant un mélange de 21 à 22 % en poids de la formule I ; 25 à 26 % en poids de la formule II ;: 46 à 47 % en poids de la formule III ; et 7 à 8 % en poids de la formule VI.

13. Fibres de protéine brun foncé ayant une longueur de 1 mm ou moins, qui sont de grand teint, lesdites fibres étant teintes avec une composition comprenant un mélange de 31 à 32 % en poids de la formule I ; 26 à 27 % en poids de la formule III ; et 42 à 43 % en poids de la formule VI.

14. Fibres de protéine brunes ayant une longueur de 1 mm ou moins, qui sont de grand teint, lesdites fibres étant teintes avec une composition comprenant un mélange de 37 à 38 % en poids de la formule I ; 21 à 22 % en poids de la formule III ; et 40 à 41 % en poids de la formule VI.

15. Fibres de protéines brun clair ayant une longueur de 1 mm ou moins, qui sont de grand teint, lesdites fibres étant teintes avec une composition comprenant un mélange de 36 à 37 % en poids de la formule I ; 15 à 16 % en poids de la formule III ; et 47 à 48 % en poids de la formule VI.

16. Postiche comprenant des fibres teintes selon l'une quelconque des revendications 1 à 15.

17. Vêtement comprenant des fibres teintes selon l'une quelconque des revendications 1 à 15.

18. Procédé pour traiter un être humain dont les cheveux sont clairsemés, pour cacher le cuir chevelu et/ou donner l'aspect de cheveux plus épais, comprenant la dispersion, sur une zone de cheveux clairsemés, de fibres teintes de protéine, polyamide ou soie, ayant une longueur de 1 mm ou moins, qui sont de grand teint, lesdites fibres étant teintes avec un colorant comprenant un composé représenté par la formule I, un composé représenté par la formule II, un composé représenté par la formule III, un composé représenté par la formule IV, et un composé représenté par la formule V ; où les formules sont les suivantes : 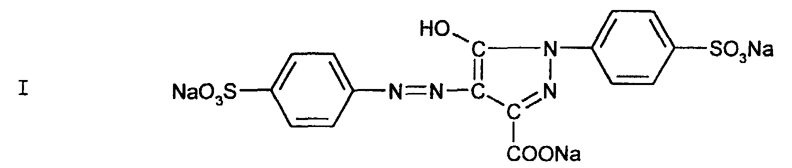 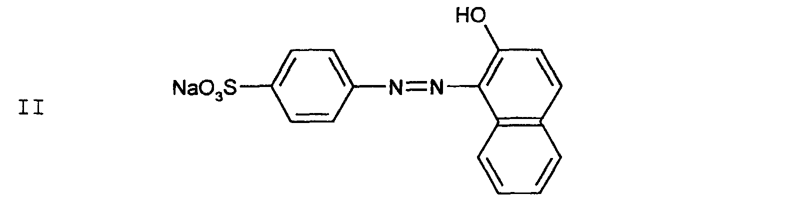 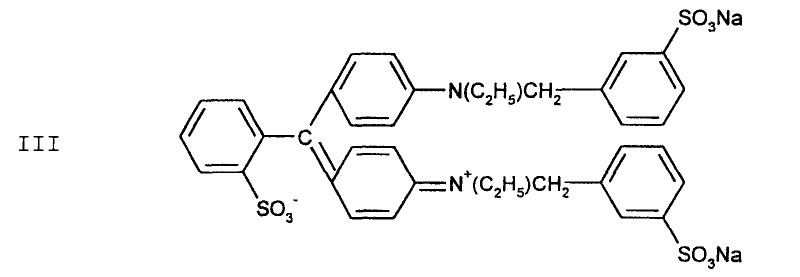 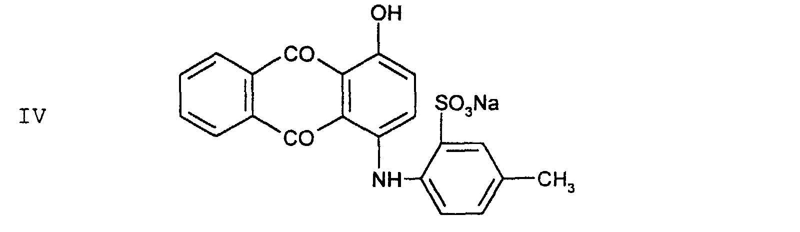 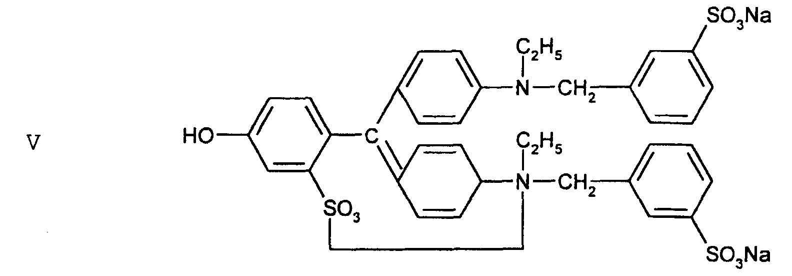 dans lequel le composé représenté par la formule I constitue 10 à 20 % en poids, le composé représenté par la formule II constitue 10 à 30 % en poids, le composé représenté par la formule III constitue 5 à 25 % en poids, le composé représenté par la formule IV constitue 15 à 35 % en poids, et le composé représenté par la formule V constitue 15 à 35 % en poids.

19. Procédé selon la revendication 18, dans lequel les fibres sont choisies dans l'ensemble constitué par les fibres de laine, de soie et de nylon.

20. Procédé pour traiter un être humain dont les cheveux sont clairsemés, pour cacher le cuir chevelu et/ou donner l'aspect de cheveux plus épais, comprenant la dispersion, sur une zone de cheveux clairsemés, de fibres teintes de protéine, polyamide ou soie, ayant une longueur de 1 mm ou moins, qui sont de grand teint, lesdites fibres étant teintes avec un colorant comprenant un composé représenté par la formule I, un composé représenté par la formule II, un composé représenté par la formule III, un composé représenté par la formule VI, et un composé représenté par la formule VII ; où les formules sont les suivantes : 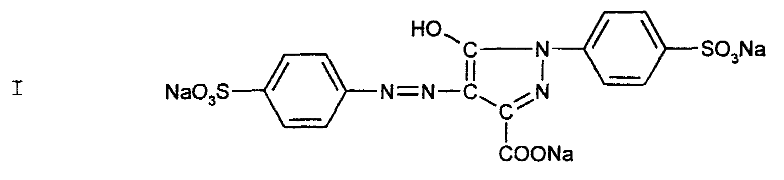 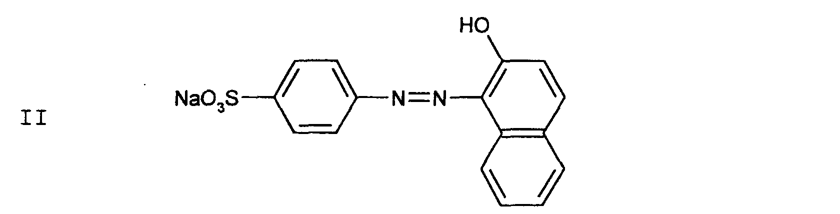 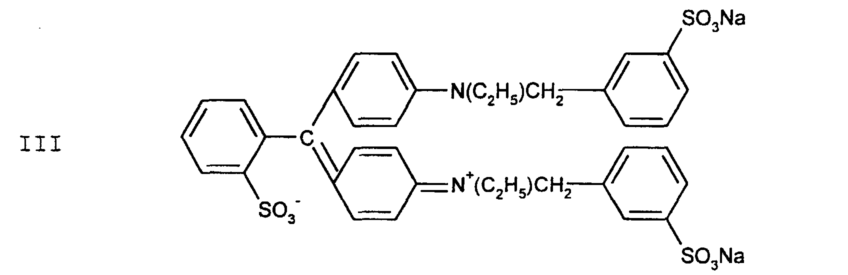 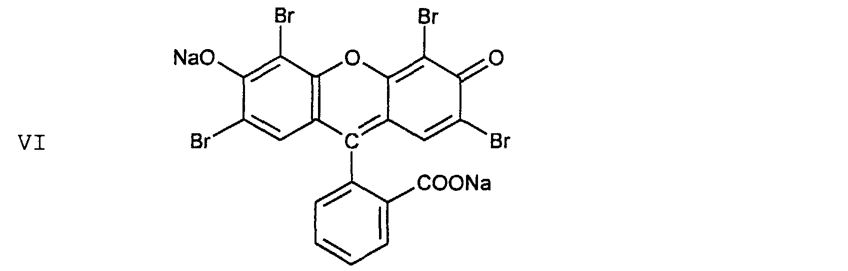 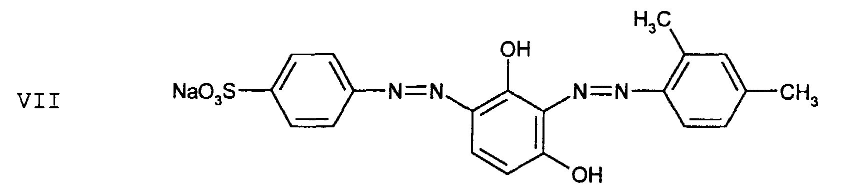 dans lequel le composé représenté par la formule I constitue 15 à 35 % en poids, le composé représenté par la formule II constitue 5 à 35 % en poids, le composé représenté par la formule III constitue 3 à 25 % en poids, le composé représenté par la formule VI constitue 5 à 30 % en poids, et le composé représenté par la formule VII constitue 15 à 40 % en poids.

21. Procédé selon la revendication 20, dans lequel les fibres sont choisies dans l'ensemble constitué par les fibres de laine, de soie et de nylon.

22. Procédé selon la revendication 18 ou 20, comprenant en outre l'application d'une laque pour cheveux sur la tête après que les fibres ont été appliquées.
